Europäisches Patentamt

European Patent Office

Office européen des brevets

(19)

(11) Numéro de publication: **0 342 097**
**A1**

(12) **DEMANDE DE BREVET EUROPEEN**

(21) Numéro de dépôt: **89401225.1**

(22) Date de dépôt: **28.04.89**

(51) Int. Cl.4: **C 23 F 3/00**
**C 02 F 1/26**

(30) Priorité: **11.05.88 FR 8806347**

(43) Date de publication de la demande:
**15.11.89 Bulletin 89/46**

(84) Etats contractants désignés:
**AT BE CH DE ES FR GB GR IT LI LU NL SE**

(71) Demandeur: **SOCIETE DE RECHERCHES TECHNIQUES ET INDUSTRIELLES (SRTI)**
**283, rue de la Minière**
**F-78530 - BUC (FR)**

(72) Inventeur: **Fremeaux, Pierre**
**Thomson - CSF SCPI - CEDEX 67**
**F-92045 Paris La Défense (FR)**

(74) Mandataire: **Phan, Chi Quy et al**
**THOMSON-CSF SCPI**
**F-92045 PARIS LA DEFENSE CEDEX 67 (FR)**

Le titre de l'invention a été modifié (Directives relatives à l'examen pratiqué à l'OEB, A-III, 7.3)

(54) **Procédé et installation pour purifier des bains de rinçage après brillantage et pour récupérer les acides de brillantage que ces bains de rinçage contiennent.**

(57) Procédé de purification et de récupération des bains de rinçage de bains acides de brillantage, caractérisé en ce qu'il comprend une mise en oeuvre en continu, et au moins des étapes suivantes, une étape de purification de bains de rinçage par des échanges liquide-liquide comportant une mise en contact de ces bains de rinçage enrichis en acides et en sels métalliques ou phase aqueuse, et d'un solvant organique ou phase organique, et une étape de récupération des acides par des échanges liquide-liquide comportant une mise en contact d'une eau et d'une phase organique chargée d'acides.

EP 0 342 097 A1

## Description

## PROCEDE DE PURIFICATION ET DE RECUPERATION DES BAINS DE RINCAGE DE BRILLANTAGE, ET MOYENS DE MISE EN OEUVRE DE CE PROCEDE

La présente invention concerne un procédé de purification et de récupération d'acides des bains de rinçage de bains acides de brillantage et des moyens de mise en oeuvre de ce procédé.

Les bains acides de brillantage destinés aux pièces en aluminium ou en alliage d'aluminium par exemple sont principalement constitués d'acide phosphorique majoritaire, d'acide sulfurique dont la concentration totale est de 5 à 10 % et d'acide nitrique ne dépassant pas une concentration de 1 à 3 %. Ce bain contient également un tensio-actif destiné à optimiser son action sur les pièces traitées.

Ces pièces une fois trempées pendant un temps bref dans le bain chaud, aux environs de 110°C, sont trempées dans un bain aqueux pour y être rincées et pour stopper l'action des acides. Au cours du temps, ce bain de rinçage s'enrichit en acides et en impuretés, constituées par des sels métalliques mis en solution par l'attaque acide. Pour limiter l'augmentation de ces concentrations, pour limiter effectivement l'attaque acide, et pour éviter des actions pertubatrices de l'accumulation des impuretés métalliques il est nécessaire de pratiquer une purge et de rajouter de l'eau propre.

Des impuretés métalliques sous forme de sels métalliques se retrouvant dans ce bain sont principalement des sels d'aluminium et secondairement des sels de cuivre, de fer, de nickel... La plupart d'entre eux sont des sulfates et des phosphates.

Les purges de ces bains de rinçage enrichis en acides et en impuretés métalliques sont habituellement neutralisées à la chaux puis rejetés. Cette routine continue jusqu'à présent sans préoccupation particulière.

La présente invention a pour point de départ une constatation pertinente que cette pratique industrielle habituelle entraîne une perte totale des acides, une consommation appréciable de chaux et une formation de précipités de phosphates et sulfates de chaux principalement, qu'il faut filtrer et décharger sur des sites autorisés.

La présente invention qui vise à éviter ou à réduire ces inconvénients, a pour objet un procédé selon la revendication 1, qui est économique et permet de purifier des bains de rinçage de bains acides de brillantage, de récupérer avantageusement des acides qui s'y trouvent, de diminuer la pollution de l'environnement, et d'améliorer des coûts de traitement. Elle a également pour objet des moyens de mise en oeuvre de ce procédé.

Pour mieux faire comprendre l'invention, on en décrit ci-après un exemple et des moyens de mise en oeuvre illustrés dans un dessin ci-annexé.

Selon l'invention, un procédé de purification et de récupération d'acides des bains de rinçage de bains acides de brillantage comprend une mise en oeuvre en continu, et au moins des étapes suivantes, une étape de purification des bains par des échanges liquide-liquide comportant une mise en contact de ces bains de rinçage enrichis en acides et en sels métalliques ou phase aqueuse, et d'un solvant organique ou phase organique, et une étape de récupération des acides par des échanges liquide-liquide comportant une mise en contact d'une eau et d'une phase organique chargée d'acides. Cette eau est de préférence une eau distillée ou permutée (échange d'ions alcalins contre ions Calcium des eaux dures).

Les échanges liquide-liquide sont des échanges de type connu qui ne sont pas décrits dans la suite. Dans ces échanges liquide-liquide, les temps de contact nécessaires entre les deux phases sont relativement brefs et la mise en oeuvre de ces échanges se fait facilement en continu industriellement. En répétant ces opérations élémentaires, on obtient dans l'étape de purification des bains de rinçage, une phase aqueuse ne contenant plus d'acides libres mais concentrée en sels métalliques, et une phase organique chargée en acides, et dans l'étape de récupération des acides, une phase aqueuse chargée d'acides et une phase organique ne contenant pas d'acides.

Dans un exemple de mise en oeuvre du procédé de l'invention, un bain de rinçage de bains acides de brillantage pour des pièces en aluminium ou alliage d'aluminium, soumis à une purification et une récupération d'acides comprend principalement une concentration en acide phosphorique allant de 90 à 550 grammes par litre, en acide sulfurique allant de 0 à 80 grammes par litre, en acide nitrique allant de 0 à 30 grammes par litre, et des impuretés métalliques sous forme de sels métalliques à savoir des phosphates d'aluminium, des sulfates d'aluminium et des nitrates d'aluminium. La concentration totale en aluminium peut aller de 7 à 40 grammes par litre.

Selon une autre caractéristique, le procédé de purification et de récupération des bains de rinçage de bains acides de brillantage comprend antérieurement aux étapes de purification de ceux-ci et de récupération des acides, une étape de concentration des bains de rinçage par évaporation de l'eau. Etant donné que le pH de la phase aqueuse n'a pratiquement qu'une action négligeable sur la vitesse des échanges liquide-liquide, pour avoir de faibles volumes à manipuler et par conséquent une moindre dépense en énergie dans la purification des bains de rinçage et de récupération d'acides, une concentration de ces bains soumis au traitement peut avoir un facteur allant de 2 à 10.

Le procédé de purification et de récupération d'acides des bains de rinçage de bains acides de brillantage comprend à une sortie de l'étape de purification des bains de rinçage, une étape de distillation de la solution contenant les impuretés ou sels métalliques, des acides non extraits, et des traces de solvant organique dissoutes, et une étape de condensation et de séparation destinée aux vapeurs issues de cette étape de distillation pour les séparer en solvant organique et en solution contenant les acides. La distillation de cette solution permet non seulement une récupération totale du solvant organique qui peut être recyclé dans l'étape de purification des bains de rinçage mais également d'éviter un rejet dans l'environnement une solution qui présente une demande chimique ou biologique importante en oxygène, incompatible avec des normes prescrites.

Le procédé de purification et de récupération d'acides des bains de rinçage de bains acides de brillantage comprend dans l'étape de purification de ces bains, une phase organique constituée par un solvant organique choisi parmi des cétones, des éthers, des esters, et des alcools.

Dans l'exemple de mise en oeuvre de l'invention, un solvant dont la solubilité en phase aqueuse phi A ($\varphi$A) et un phase organique phi O ($\varphi$O), la tension superficielle sigma ($\sigma$), le point éclair, et le prix sont des facteurs qui doivent être tenu en compte dans un choix d'une phase organique, peut être pris parmi

|  | Tension superficielle $\sigma$, - mN/m | Solubilité $\varphi$A phase poids % solvant | Solubilité $\varphi$O Phase poids % $H_2O$ |
|---|---|---|---|
| n butanol | 1,8 | 7,8 | 20,4 |
| n pentanol | 4,4 | 2,19 | 7,5 |
| n hexanol | 6,8 | 0,58 | 7,2 |
| m isobutylcétone | 14,1 | 1,7 | 1,9 |
| Di isopropyléther | 1,2 | 1,2 | 0,63 |

dans lesquels $\sigma$ est exprimé en millinewtons/mètres. Le tributyl phosphate peut être utilisé en synergie avec l'un de ces solvants ou avec le diéthyl hexanol ou le di isobutyléther.

Les impuretés métalliques, qui souillent les acides à purifier complexent une partie de l'acide phosphorique que l'on veut recycler, sous forme de phosphates. Des sels d'aluminium présents dans les bains à traiter ont en majorité sous la forme $Al(PO_4)_3/nH_3O^+$.

Selon l'invention, pour obtenir un bon rendement de récupération de cet acide, les phosphates d'aluminium sont déplacés en sulfates d'aluminium par injection d'acide sulfurique dans les bains à recycler. L'acide phosphorique se retrouve alors extractible à l'état libre.

Dans le cas d'une récupération d'un acide phosphorique pur, une étape de lavage au carbonate ou à la soude diluée de la solution organique chargée d'acides est incorporée entre l'étape de purification des bains de rinçage et celle de récupération des acides pour éliminer la faible quantité d'acide sulfurique extraite.

Quant à l'acide nitrique, ses concentrations dans les bains sont faibles. Il n'est pas extrait et reste pratiquement en phase aqueuse sous forme de nitrates d'aluminium.

Le procédé de purification et de récupération des bains de rinçage de bains acides de brillantage comprend dans l'étape de récupération des acides, une étape de concentration de la solution aqueuse d'acides par évaporation d'eau et de solvant organique, et une étape de condensation et de séparation destinées à des vapeurs d'eau et de solvant issues de cette étape de la concentration pour les séparer en solvant organique et en eau.

Le solvant organique et l'eau récupérés peuvent être recyclés respectivement dans l'étape de purification des bains de rinçage et dans l'étape de récupération des acides.

Les moyens de mise en oeuvre du procédé de l'invention exposé dans les paragraphe précédents comprennent selon l'exemple illustré, au moins deux colonnes pulsées, une colonne de purification des bains de rinçage ou d'extraction 1, équipée de disques et couronnes de transparence (rapport de la surface totale des ouvertures ou passages, à la surface totale occupée par ces couronnes) 25% et une colonne de récupération d'acides ou de réextraction 2 équipée de disques et couronnes de transparence 25%.

Ces deux colonnes 1 et 2 sont des colonnes de types connues pulsées par une jambe de pulsation alimentée par de l'air comprimé au moyen d'une vanne à trois voies, non représentées.

Dans l'exemple illustré, la colonne d'extraction 1 comprend un diamètre nominal de l'ordre de 50 millimètres, une hauteur utile de l'ordre de 6,60 mètres, des disques et couronnes en polytétrafluoroéthylène tandis que la colonne de réextraction 2 comprend un diamètre nominal de l'ordre de 50 millimètres, une hauteur utile de l'ordre de 5,40 mètres, des disques et couronnes en métal inoxydable.

Un dispositif de concentrations 3 des bains de rinçage comportant un évaporateur 4 et un condenseur 5 de types connus est monté en amont de cette colonne d'extraction 1. Un bac tampon 6 représenté en traits discontinus est le cas échéant ajouté à ce dispositif de concentration 3 pour stocker et homogénéiser ces bains de rinçage.

Les bains de rinçage à traiter arrivent au point 7 et sont éventuellement stockées et homogénéisés dans le bac tampon 6. Ces bains de rinçage qui sont soumis à une concentration par évaporation d'eau sont introduits dans l'évaporateur 4 qui donne à une première sortie 9, de la vapeur d'eau, et à une deuxième sortie 10, une solution concentrée en acides et en impuretés métalliques. La vapeur d'eau recueillie à la sortie 9 est transformée en eau dans le condenseur 5. La solution concentrée en acides et en impuretés métalliques stockées dans un bac 12 est envoyée par une pompe 13 en un point 15 de la partie supérieure de la colonne d'extraction 1.

Cette solution aqueuse concentrée en acides et en sels métalliques contient par exemple principalement
$PO_4^{---}$ environ 8 à 900 grammes par litre
$SO_4^{--}$ environ 50 à 60 grammes par litre
$NO_3^-$ environ 10 grammes par litre
$Al^{+++}$ environ 10 à 35 grammes par litre

Une solution concentrée d'acide sulfurique est ajoutée en 14 à la solution aqueuse concentrée en sels métalliques et en acides dans le cas d'une décomplexation des phosphates.

Durant une purification, un solvant organique soutiré d'un bac de stockage 16 par une pompe 17 est introduit en un point 25 dans la partie inférieure de la colonne d'extraction 1 et envoyé en contre-courant de la solution aqueuse concentrée en acides et en sels métalliques introduite en 15. La solution aqueuse descend vers le pied de la colonne d'extraction 1 en se déchargeant progressivement de ses acides. Ces acides passent dans le solvant organique et une solution organique chargée en acides est recueillie à un sortie 18 de la partie supérieure de la colonne d'extraction 1. A la sortie d'une vanne de soutirage 19 de la partie inférieure de la colonne d'extraction 1 est recueillie une solution encore acide avec toutes les impuretés cationiques et presque tous les anions autres que $PO_4^{---}$ et $SO_4^{--}$ et quelques pourcentages de solvant organiques.

La solution recueillie à la sortie de la vanne 19 de la colonne d'extraction 1 est stockée dans un bac tampon 21 et envoyée par une pompe 22 en un point 24 dans un dispositif de distillation 23 d'un type connu. Les vapeurs recueillies au point 26 de la partie supérieure du dispositif de distillation 23 sont envoyées dans un dispositif de condensation 27 comportant un condenseur 28 et un séparateur 29 de types connus. Les vapeurs condensées dans le condenseur 28 sont séparées dans le séparateur 29 en phase légère organique qui est évacuée à travers une sortie 30 et retournée dans un bac de stockage de solvant 16, et en phase aqueuse évacuée par une sortie 33 pour être recyclée en un point 34 dans le dispositif de distillation 23.

Des rejets évacués en un point 35 de la partie inférieure du dispositif de distillation 23 sont destinés à être préalablement précipités par de la chaux, filtrés et essorés avant d'être déchargés sur un site autorisé.

Leur composition est par exemple principalement :
$Al^{+++}$ 10 g à 40 g/litre
$PO_4^{---}$ 20g à 50 g/litre
pH environ 0,8 à 1
d environ 1,03 à 1,05.

Dans l'exemple illustré la solution organique chargée d'acides recueillies en 18 de la partie supérieure de la colonne d'extraction 1, est soumise à un lavage par une solution de soude diluée dans un mélangeur-décanteur 38. L'acide sulfurique y est éliminé. Une analyse du mélange acide phosphorique-acide sulfurique ($H_3PO_4$, $H_2SO_4$) ou de l'acide phosphorique seul ($H_3PO_4$) montre que les ions $NO_3^-$ notamment, et les ions $Cl^-$, $F^-$ également ne sont pas extraits. Il est constaté que sans ce lavage à la soude diluée, le facteur de décontamination en aluminum est voisin de 100 par rapport à la concentration au point 7 et qu'avec un tel lavage ce facteur devient supérieur à 5000.

Une solution organique chargée principalement d'acide phosphorique ($H_3PO_4$) et déchargée d'acide sulfurique ($H_2SO_4$) recueillie à une sortie 37 du mélangeur-décanteur 38 et stockée dans un bac tampon 39 est renvoyée par une pompe 40 dans la colonne de récupération d'acides ou colonnes de réextraction 2 en un point 41 de la partie inférieure de celle-ci.

Du rejet aqueux recueilli à une autre sortie 44 du mélangeur-décanteur 38 peut être traité puis renvoyé au point 14 pour être recyclé dans la purification des bains de rinçage.

Durant l'étape de récupération d'acides, une solution d'eau contenant quelques pour cent résiduels de solvant est soutirée d'un bac de stockage 46 par une pompe 47 et introduite en un point 48 de la partie supérieure de la colonne de récupération d'acide ou de réextraction 2, en contre courant de la solution organique chargée en acides admises en un point 41 de la partie inférieure de cette colonne de réextraction 2.

Les acides passent dans la phase aqueuse où ils se trouvent concentrés de manière que cette phase aqueuse devienne une phase aqueuse lourde qui est évacuée à travers une vanne de soutirage 49 de la partie inférieure de la colonne de réextraction 2 et recueillie dans un bac tampon 50.

La composition de la solution à la sortie de la vanne 49 est par exemple principalement :
$H_3PO_4$ = 300 à 380 grammes par litre
solvant organique quelques pour cent
d = 1,15 à 1,18

Du solvant déchargé recueilli à une sortie 51 de la partie supérieure de la colonne de réextraction 2 est envoyé dans le bac de stockage 16 pour être soutiré par la pompe 17 et réintroduit dans la colonne de purification ou d'extraction 1.

La solution aqueuse chargée en acides sortant de la colonne d'extraction 2 et stockées dans le bac tampon 50 est envoyée par une pompe 52 dans un dispositif de concentration 53 qui comporte un évaporateur 54.

Une solution acide concentrée récupérée à une sortie inférieure 55 de l'évaporateur 54 est recueillie dans un bac de stockage 56.

La composition de cette solution acide est par exemple principalement :
d = 1,58 $H_3PO_4$ 1200 grammes par litre
$H_2SO_4$ inférieur ou égal à 1 gramme par litre
$Al^{+++}$ inférieur ou égal à 500mg par litre
Solvant organique inférieur ou égal à 0,1 %.

Des vapeurs d'eau et de solvant organiques produites à une sortie supérieure 58 de l'évaporateur 54 sont envoyées dans un dispositif de condensation 60 qui comportent un condenseur 61 et un séparateur 62. Le condenseur sortant du condenseur 61 est séparé dans le séparateur 62 en phase organique légère qui est évacuée à travers une sortie 64 et récupérée dans le bac de stockage 16, et en phase aqueuse contenant un peu de phase organique résiduelle (correspondant à la solubilité du solvant dans l'eau) qui est stockée dans le bac 46 pour être réintroduite dans la colonne de réextraction 2. Une eau permutée ou adoucie peut être ajoutée en appoint en 67 dans le bac 46.

Dans l'exemple illustré selon lequel le procédé de l'invention est mis en oeuvre en continu, le niveau d'interphase dans chacune des colonnes d'extraction 1 et de réextraction 2 est stabilisé par une chaîne de régulation d'un type connu 68 agissant sur le degré d'ouverture des vannes de soutirage 19, 49 des phases lourdes.

La colonne d'extraction 1 fonctionne en phase organique continue avec un rapport de débit organique/aqueux compris entre 8 et 10 et un débit spécifique total voisin de 1,5 litre par heure par centimètre carré. Cette étape est déconcentrante vis à vis des acides.

La colonne de réextraction 2 fonctionne en continu en phase aqueuse continue avec un rapport de débit aqueuse/organique de 0,25. Cette étape est concentrante.

Dans l'exemple illustré, la récupération de l'acide phosphorique est obtenue avec un rendement supérieur à 95%. Cette récupération de l'acide phosphorique peut atteindre 98 ou 99% en rendement, en augmentant la hauteur des colonnes 1 et 2, la récupération de l'acide sulfurique étant partielle.

Pour des données identiques de bains de rinçage, la quantité de boues (rejets évacués au point 35) produites selon le procédé de l'invention n'est que 2 à 10% de celle résultant d'une neutralisation à la chaux à la manière habituelle rappelée dans un paragraphe précédent. Il en résulte une importante diminution de la pollution de l'environnement.

Par ailleurs, il est constaté que le coût de fonctionnement des ateliers de mise en oeuvre du procédé de l'invention est également nettement inférieur au coût mise en oeuvre d'une neutralisation habituelle à la chaux des bains de rinçage.

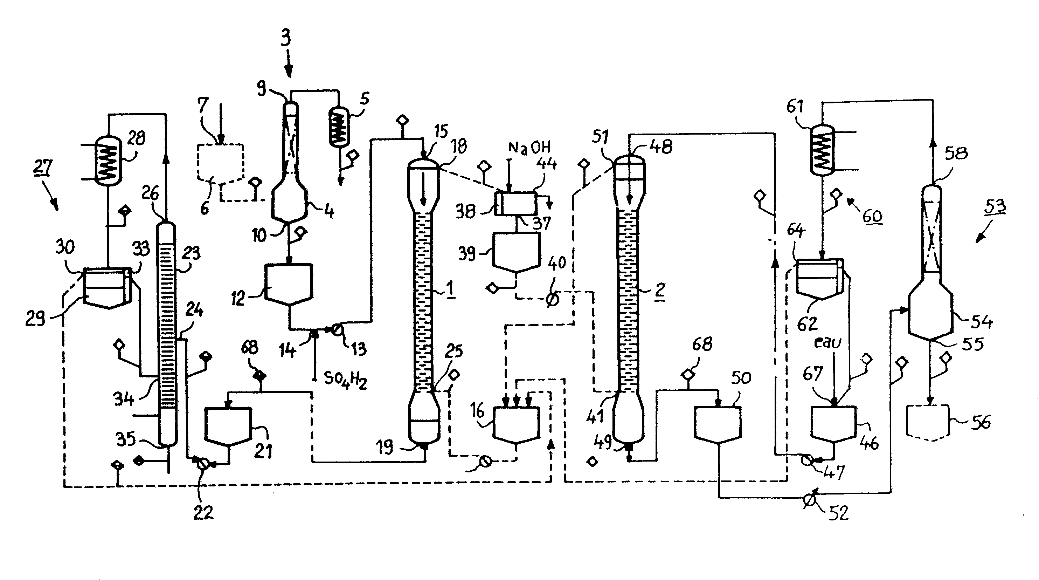

**Revendications**

1. Procédé de purification et de récupération des bains de rinçage de bains acides de brillantage, comportant au moins une étape de purification de bains de rinçage par des échanges liquide-liquide entre ces bains de rinçage enrichis en acides, principalement acide phosphorique et en sels métalliques, principalement sous forme de phosphates ou phase aqueuse, et un solvant organique ou phase organique, et une étape de récupération des acides par des échanges liquide-liquide entre une et une phase organique chargée d'acides, caractérisé en ce qu'il comprend dans l'étape de purification des bains de rinçage, une décomplexation des phosphates par une solution concentrée d'acide sulfurique.

2. Procédé selon la revendication 1, caractérisé en ce qu'il comprend antérieurement aux étapes de purification des bains de rinçage et de récupération des acides, une étape de concentration de ces bains de rinçage par évaporation de l'eau.

3. Procédé selon l'une des revendications 1 et 2, caractérisé en ce que dans l'étape de purification des bains de rinçage, une mise en contact à contre courant de la phase aqueuse et de la phase organique est réalisée avec un rapport de débit organique/aqueux compris entre 8 et 10 et dans l'étape de récupération des acides, une mise en contact à contre courant d'une eau et d'une phase organique chargée d'acides est réalisée avec un rapport de débit aqueux/organique de 0,25.

4. Procédé selon l'une des revendications 1 à 3, caractérisé en ce qu'il comprend à une sortie de l'étape de purification des bains de rinçage, une étape de distillation de la solution contenant des sels métalliques, d'acides non extraits et de solvant organique en excès, et une étape de condensation et de séparation destinée aux vapeurs issues de cette étape de distillation pour les séparer en solvant organique et en solution contenant d'acides.

5. Procédé selon l'une des revendications 1, 3 et 4, caractérisé en ce qu'il comprend un solvant organique choisi parmi n butanol, n pentanol, n hexanol, m isobutylcétone, di isopropyléther.

6. Procédé selon l'une des revendications 1 à 4, caractérisé en ce qu'il comprend entre l'étape de purification des bains de rinçage et celle de récupération des acides, une étape de lavage au carbonate ou à la soude diluée, de la solution organique chargée d'acides.

7. Procédé selon l'une des revendications 1 à 6, caractérisé en ce qu'il comprend dans l'étape de récupération des acides, une étape de concentration de la solution aqueuse d'acides par évaporation d'eau et de solvant, et une étape de condensation et de séparation destinée aux vapeurs d'eau et de solvant issues de cette étape de concentration pour les séparer en solvant et en eau.

8. Moyens de mise en oeuvre du procédé de l'une des revendications 1 à 7, caractérisés en ce qu'ils comprennent au moins deux colonnes pulsées, une colonne de purification des bains de rinçage ou d'extraction (1) équipée de disques et couronnes de transparence 25% et une colonne de récupération des acides ou de réextraction (2) équipée de disques et couronnes de transparence 25%.

9. Moyens selon la revendication 8, caractérisés en ce qu'ils comprennant une colonne d'extraction (1) ayant un diamètre nominal de l'ordre de 50 millimètres, une hauteur utile de l'ordre de 6,60 mètres et des disques et couronnes en polytétrafluoroéthylène, et une colonne de réextraction (2) ayant un diamètre nominal de l'ordre de 50 millimètres, une hauteur utile de l'ordre de 5,40 mètres et des disques et couronnes en métal inoxydable.

10. Moyens selon l'une des revendications 8 et 9, caractérisés en ce qu'ils comprennent en amont de la colonne d'extraction (1) un dispositif de concentration (3) comportant un évaporateur (4) et un condenseur (5).

11. Moyens selon l'une des revendications 8 à 10, caractérisés en ce qu'ils comprennent en aval de la colonne d'extraction (1), un dispositif de distillation (23) et un dispositif de condensation (27) comportant un condenseur (28) et un séparateur (29).

12. Moyens selon l'une des revendications 8 à 11, caractérisés en ce qu'ils comprennent en aval de la colonne d'extraction (1), un mélangeur-décanteur (38) destiné au lavage de la solution organique chargée d'acides.

13. Moyens selon l'une des revendications 8 à 12, caractérisés en ce qu'ils comprennent en aval de la colonne de réextraction (2), d'une part, un dispositif de concentration (53) comportant un évaporateur (54) et, d'autre part, un dispositif de condensation (60) comportant un condenseur (61) et un séparateur (62).

14. Moyens selon l'une des revendications 8 à 13, caractérisés en ce qu'ils comprennent une chaine de régulation (68) agissant sur le degré d'ouverture des vannes de soutirage (19, 49) des phases lourdes des colonnes d'extraction (1) et de réextraction (2) en vue de stabiliser les niveaux d'interphase dans ces colonnes.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | GB-A-1 571 949 (RTL CONTACTOR HOLDING S.A.) * Revendications 1-5; tableau * | 1-3,5 | C 23 F 3/00 C 02 F 1/26 |
| Y | US-A-3 956 464 (E.K. DRECHSEL et al.) * Revendication 1; figure 1; colonne 8, lignes 10-14 * | 1-3,5 | |
| A | DE-A-1 952 104 (GEBRÜDER GIULINI GmbH) * Page 2, paragraphe 4 - page 4, paragraphe 2 * | 1,5 | |
| A | GB-A-1 345 710 (ALBRIGHT & WILSON LTD) * Revendications 1-13; figures 1,2 * | 1-14 | |
| A | US-A-4 117 092 (K. BELTZ et al.) * Revendications 1,2 * | 1 | |
| A | US-A-4 083 758 (W.D. HAMBY et al.) | | |

### DOMAINES TECHNIQUES RECHERCHES (Int. Cl.4)

C 23 F
C 02 F
B 01 D
C 23 G
C 01 B

Le présent rapport a été établi pour toutes les revendications

| Lieu de la recherche | Date d'achèvement de la recherche | Examinateur |
|---|---|---|
| LA HAYE | 12-07-1989 | DE ANNA P.L. |